# FASCICULE DE BREVET EUROPEEN

(11) **EP 0 604 288 B1**
(45) Date de publication et mention de la délivrance du brevet: **30.10.1996**
(21) Numéro de dépôt: 93403086.7
(22) Date de dépôt: 17.12.1993
(51) Int. Cl.: F16L 3/24

(54) **Agencement pour la fixation d'un organe sur une paroi**
Anordnung zur Befestigung eines Teiles auf einer Wand
Arrangement for the fixation of a part to a wall

(30) Priorité: 21.12.1992 FR 9215397
(43) Date de publication de la demande: 29.06.1994
(73) Titulaire: AUTOMOBILES PEUGEOT, 75116 Paris (FR); AUTOMOBILES CITROEN, 92200 Neuilly-sur-Seine (FR)
(72) Inventeur: Vuillemey, Christain, F-70400 Hericourt (FR)
(74) Mandataire: Moncheny, Michel

(56) Documents cités:
- EP-A- 0 018 597
- EP-A- 0 288 896
- WO-A-93/00202
- DE-A- 4 108 524
- GB-A- 558 303

## Description

La présente invention concerne un agencement d'un organe sur une paroi.

L'invention concerne plus particulièrement un agencement pour la fixation d'un organe tel qu'un câble ou une conduite sur un élément de carrosserie ou de structure d'un véhicule automobile.

L'invention concerne plus particulièrement un agencement du type de celui décrit et représenté dans le document EP-A-288.896 qui comporte une attache dont une première partie comporte des moyens pour sa fixation sur un bord libre d'une pièce liée à la paroi et dont une seconde partie reçoit un tronçon de l'organe à fixer.

Un agencement selon cette conception permet notamment d'éviter d'avoir à percer la paroi, comme dans le cas de l'utilisation d'une fixation à rivet ou équivalent, ou des opérations de soudage pour la fixation de chacune des agrafes ou attaches.

On constate toutefois que la solution décrite et représentée dans le document EP-A-288.896 n'est pas entièrement satisfaisante dans la mesure où elle fait appel à une agrafe métallique qui s'accroche sur le bord libre de la pièce liée à la paroi et qui risque d'endommager la pièce et, si celle-ci est métallique, de provoquer sa corrosion. De plus, la fixation n'est pas entièrement fiable dans la mesure où l'attache n'est pas maintenue, ni latéralement ni transversalement par rapport à la pièce, sa position ne dépendant que d'un effet de serrage.

WO-A-9300202 décrit un agencement d'un organe sur une paroi. Le contenu de ce document est compris dans l'état de La technique au sens de L'articLe 54(3) CBE.

Afin de remédier aux inconvénients exposés ci-dessus, l'invention propose un agencement d'un organe sur une paroi, notamment d'un élément de carrosserie ou de structure d'un véhicule automobile, caractérisé en ce qu'il comporte une attache dont une première partie comporte des moyens pour sa fixation sur un bord libre d'une doublure de la paroi et dont une seconde partie reçoit l'organe à fixer, des faces en vis-à-vis de la paroi et de la doublure délimitant une cavité dans Lalaquelle est reçue une portion de la première partie de l'attache.

Selon d'autres caractéristiques de l'invention:
- la première partie de l'attache présente sensiblement la forme d'une pince qui chevauche un bord libre de la doublure et dont une première branche est reçue dans la cavité ;
- la portion de la paroi et la doublure sont sensiblement planes et parallèles ;
- les faces opposées de la première branche de l'attache sont guidées en coulissement entre les faces en vis-à-vis de la doublure et de la portion de la paroi ;
- l'agencement comporte des moyens pour immobiliser l'attache en translation par rapport à la doublure selon une direction sensiblement perpendiculaire au bord libre de la doublure ;
- les moyens d'immobilisation sont des moyens d'immobilisation par coopération de formes ;
- l'une des branches de la pince ou la doublure comporte un bossage en saillie qui est reçu dans une ouverture complémentaire formée respectivement dans la doublure ou dans l'une des branches de la pince ;
- la doublure comporte un trou dans lequel est reçu un bossage formé en saillie sur la face interne de la seconde des deux branches de la pince ;
- la seconde partie de l'attache comporte au moins une pince déformable élastiquement pour l'introduction d'un tronçon d'un câble ou d'une conduite selon une direction transversale à sa longueur ; et
- l'attache est réalisée en une seule pièce par moulage en matière plastique.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant la fixation d'un câble électrique au moyen d'un agencement conforme aux enseignements de l'invention ;
- la figure 2 est une vue de face à plus grande échelle de l'agencement illustré à la figure 1 ; et
- la figure 3 est une vue en section selon la ligne 3-3 de la figure 2.

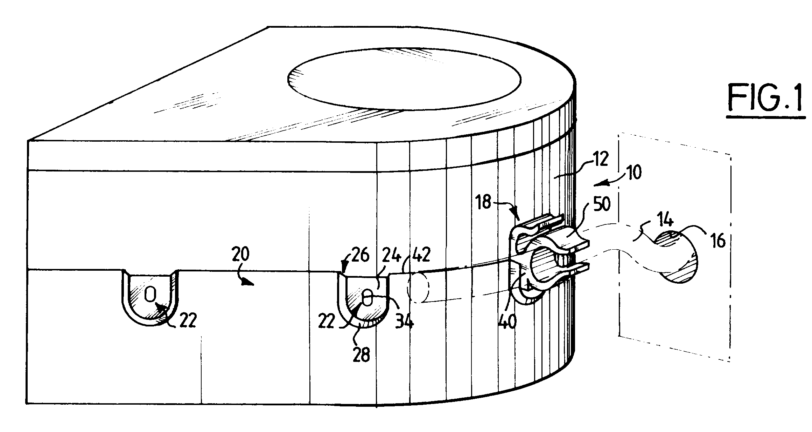

On reconnaît sur la figure 1 la partie de la structure de la caisse d'un véhicule automobile appelée passage de roue 10 comprenant une paroi 12 protégeant un organe de suspension, non représenté, réalisée en tôle et le long de laquelle on désire assurer la fixation d'un câble électrique 14 passant par une ouverture 16.

La fixation du câble 14 est assurée au moyen d'une série d'attaches réalisées par moulage en matière plastique dont l'une 18 est illustrée sur la figure 1.

Afin de permettre le montage et la fixation des attaches 18, la paroi en tôle 12 est doublée, dans la zone de fixation, par une tôle parallèle adjacente 20 fixée par soudage à la tôle 12.

La tôle 20 comporte une série de portions déformées 22 dont chacune permet le montage et la fixation d'une attache 18.

Dans la zone déformée 22, la doublure 20 se présente sous la forme d'une portion de tôle plane 24 qui s'étend parallèlement à la tôle 12 et qui délimite avec cette dernière une cavité 26.

La cavité 26 est ainsi délimitée sur toute sa hauteur par les faces planes en vis-à-vis 13 et 25 des tôles 12 et 24.

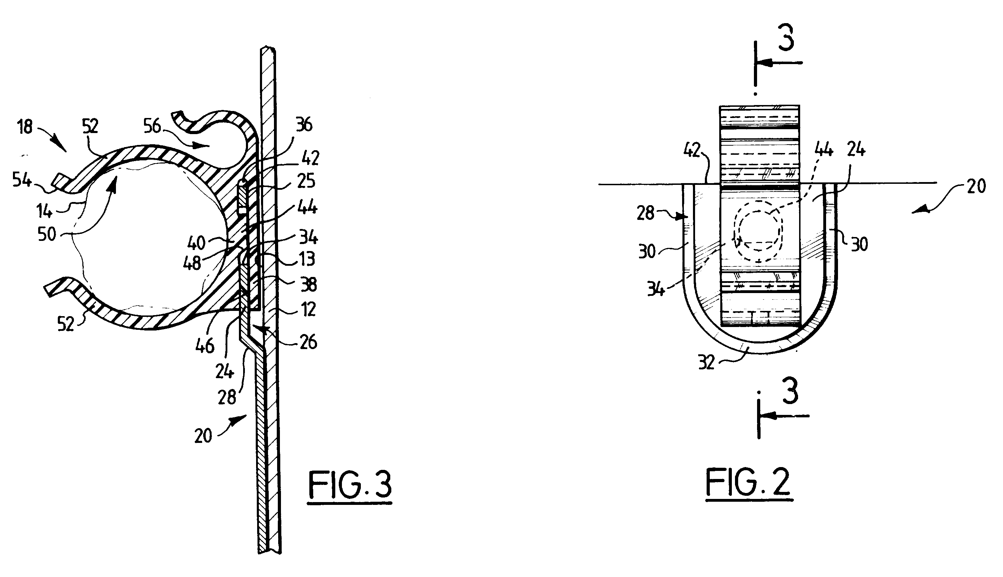

Comme on peut le voir sur les figures 1 et 2, la portion 24 de la doublure 20 est délimitée latéralement par un bord plié 28 comportant deux tronçons verticaux 30 et un tronçon inférieur en arc de cercle 32.

Chacune des parties 24 comporte, sensiblement en son centre, un trou 34 dont la fonction sera précisée ultérieurement.

L'attache 18 comporte une première partie pour sa fixation sur la partie 24 de la doublure 20 réalisée sous la forme d'une pince 36 en épingle à cheveux.

La pince 36 comporte une première branche verticale 38 qui est reçue dans la cavité 26 et une seconde branche verticale 40, parallèle à la première branche 38, de manière que la pince 36 chevauche, pratiquement sans serrage, le bord horizontal libre 42 de la partie 24 de la doublure 20.

La mise en place de l'attache 18 s'effectue donc en introduisant cette dernière verticalement vers le bas, en considérant les figures, jusqu'à ce qu'un bossage 44, réalisé venu de matière avec l'attache 18 et qui fait saillie transversalement depuis la face interne 46 de la seconde branche 40, soit reçu dans le trou 34.

Afin de faciliter la mise en place de l'attache 18, le bossage 44 comporte un chanfrein 48.

L'attache 18 comporte également une seconde partie 50 pour la fixation du câble 14.

Cette partie est réalisée sous la forme d'une pince déformable élastiquement dont les branches ou mors 52 délimitent une ouverture 54 permettant la mise en place du câble 14 en l'introduisant dans la pince 50 transversalement par rapport à sa longueur.

Dans le mode de réalisation illustré sur les figures, l'attache 18 comporte également une seconde pince 56 permettant la fixation d'un autre câble ou d'une conduite.

L'attache 18 est une pièce qui peut être réalisée à un coût réduit, par exemple par moulage en matière plastique, et dont le montage est particulièrement simple.

L'élasticité propre à la constitution de la pince 36 permet d'effectuer, le cas échéant, le démontage de l'attache 18 en exerçant une traction transversale visant à extraire le bossage 44 du trou 34 pour permettre le dégagement de la branche 38 hors de la cavité 26.

On constate qu'il n'est pas nécessaire d'effectuer des trous dans la paroi principale en tôle 12 et qu'il n'existe aucun risque de corrosion.

## Revendications

1. Agencement d'un organe (14) sur une paroi (12), notamment d'un élément de carrosserie ou de structure d'un véhicule automobile, caractérisé en ce qu'il comporte une attache (18) dont une première partie comporte des moyens pour sa fixation sur un bord libre (42) d'une doublure (24) de la paroi (12) et dont une seconde partie (50) reçoit l'organe à fixer, des faces en vis-à-vis (13, 25) de la paroi (12) et de la doublure (24) délimitant une cavité (26) dans laquelle est reçue une portion (38) de la première partie de l'attache (18).

2. Agencement selon la revendication 1, caractérisé en ce que la première partie de l'attache présente sensiblement la forme d'une pince (36) qui chevauche un bord libre (42) de la doublure et dont une première branche (38) est reçue dans la cavité (26).

3. Agencement selon la revendication 2, caractérisé en ce que la portion de la paroi et la doublure (24) sont sensiblement planes et parallèles.

4. Agencement selon la revendication 3, caractérisé en ce que les faces opposées de la première branche (38) de l'attache sont guidées en coulissement entre les faces en vis-à-vis (25, 13) de la doublure (24) et de la portion de la paroi.

5. Agencement selon l'une quelconque des revendications 2 à 4, caractérisé en ce qu'il comporte des moyens (34, 44) pour immobiliser l'attache en translation par rapport à la doublure selon une direction sensiblement perpendiculaire au bord libre de la doublure.

6. Agencement selon la revendication 5, caractérisé en ce que les moyens d'immobilisation sont des moyens d'immobilisation par coopération de formes.

7. Agencement selon la revendication 6, caractérisé en ce que l'une des branches (38, 40) de la pince ou la doublure (24) comporte un bossage (44) en saillie qui est reçu dans une ouverture (34) complémentaire formée respectivement dans la doublure (24) ou dans l'une des branches (38, 40) de la pince.

8. Agencement selon la revendication 7, caractérisé en ce que la doublure (24) comporte un trou (34) dans lequel est reçu un bossage (44) formé en saillie sur la face interne (46) de la seconde (40) des deux branches (38, 40) de la pince.

9. Agencement selon l'une quelconque des revendications précédentes, caractérisé en ce que la seconde partie de l'attache (18) comporte au moins une pince déformable élastiquement (50) pour l'introduction d'un tronçon d'un câble ou d'une conduite selon une direction transversale à sa longueur.

10. Agencement selon la revendication 9, caractérisé en ce que l'attache est réalisée en une seule pièce par moulage en matière plastique.

## Patentansprüche

1. Anordnung eines Organs (14) auf einer Wand (12), insbesondere eines Karosserie- oder Strukturelements eines Kraftfahrzeugs, dadurch gekennzeichnet, daß sie eine Halterung (18) umfaßt, von der ein erster Teil Mittel zu deren Befestigung an einem freien Rand (42) einer Verkleidung (24) der Wand (12) aufweist und von einer ein zweiter Teil (50) das zu befestigende Organ aufnimmt, wobei einander gegenüberliegende Flächen (13, 25) der Wand (12) und der Verkleidung (24) einen Hohlraum (26) abgrenzen, in dem ein Abschnitt (38) des ersten Teils der Halterung (18) aufgenommen wird.

2. Anordnung nach Anspruch 1, dadurch gekennzeichnet, daß der erste Teil der Halterung im wesentlichen die Form einer Klemme (36) aufweist, die einen freien Rand (42) der Verkleidung übergreift und von der ein erster Arm (38) in dem Hohlraum (26) aufgenommen wird.

3. Anordnung nach Anspruch 2, dadurch gekennzeichnet, daß der Abschnitt der Wand und die Verkleidung (24) im wesentlichen eben und parallel sind.

4. Anordnung nach Anspruch 3, dadurch gekennzeichnet, daß die gegenüberliegenden Flächen des ersten Armes (38) der Halterung zwischen den einander gegenüberliegenden Flächen (25, 13) der Verkleidung (24) und des Abschnitts der Wand gleitend geführt werden.

5. Anordnung nach einem der Ansprüche 2 bis 4, dadurch gekennzeichnet, daß sie Mittel (34, 44) umfaßt, um die Halterung hinsichtlich einer Parallelverschiebung in bezug auf die Verkleidung gemäß einer im wesentlichen senkrechten Richtung zum freien Rand der Verkleidung zu immobilisieren.

6. Anordnung nach Anspruch 5, dadurch gekennzeichnet, daß die Mittel zur Immobilisierung Mittel zur Immobilisierung durch Zusammenwirken von Formen sind.

7. Anordnung nach Anspruch 6, dadurch gekennzeichnet, daß einer der Arme (38, 40) der Klemme oder die Verkleidung (24) einen vorspringenden Buckel (44) aufweist, der in einer komplementären Öffnung (34) aufgenommen wird, die jeweils in der Verkleidung (24) oder in einem der Arme (38, 40) der Klemme vorgesehen ist.

8. Anordnung nach Anspruch 7, dadurch gekennzeichnet, daß die Verkleidung (24) ein Loch (34) aufweist, in dem ein Buckel (44) aufgenommen wird, der vorspringend auf der Innenfläche (46) des zweiten (40) der beiden Arme (38, 40) der Klemme ausgebildet ist.

9. Anordnung nach einem der vorhergehenden Ansprüche, dadurch gekennzeichnet, daß der zweite Teil der Halterung (18) mindestens eine elastisch verformbare Klemme (50) zum Einführen eines Abschnitts eines Kabels oder einer Leitung gemäß einer Richtung quer zu dessen Länge umfaßt.

10. Anordnung nach Anspruch 9, dadurch gekennzeichnet, daß die Halterung in einem Stück durch Guß aus Kunststoff gefertigt ist.

## Claims

1. Arrangement of a member (14) on a wall (12), particularly a body element or structure of a motor vehicle, characterized in that it incorporates a fastener (18), where of a first portion has means for its fixture to a free edge (42) of a lining (24) of the wall (12) and whereof a second portion (50) receives the member to be fixed, facing faces (13, 25) of the wall (12) and the lining (24) defining a cavity (26) in which is received a part (38) of the first portion of the fastener (18).

2. Arrangement according to claim 1, characterized in that the first portion of the fastener is essentially in the form of a clamp (36), which overlaps a free edge (42) of the lining and whereof a first branch (38) is received in the cavity (26).

3. Arrangement according to claim 2, characterized in that the portion of the wall and the lining (24) is substantially planar and parallel.

4. Arrangement according to claim 3, characterized in that the opposite faces of the first branch (38) of the fastener are slidingly guided between the facing faces (25, 13) of the lining (24) and the wall portion.

5. Arrangement according to any one of the claims 2 to 4, characterized in that it has means (34, 44) for fixing the fastener in translation with respect to the lining in a direction substantially perpendicular to the free edge of the lining.

6. Arrangement according to claim 5, characterized in that the fixing means are based on shape cooperation.

7. Arrangement according to claim 6, characterized in that one of the branches (38, 40) of the clamp or lining (24) has a projecting boss (44), which is received in a complimentary opening (34) respectively formed in the lining (24) or in one of the clamp branches (38, 40).

8. Arrangement according to claim 7, characterized in that the lining (24) has a hole (34) in which is received a boss (44) formed in projecting manner on the inner face (46) of the second (40) of the two clamp branches (38, 40).

9. Arrangement according to any one of the preceding claims, characterized in that the second portion of the fastener (18) has at least one elastically deformable clamp (50) for the introduction of a cable or duct section in a direction transverse to its length.

10. Arrangement according to claim 9, characterized in that the fastener is produced in one piece by plastics material moulding.
